# EUROPEAN PATENT APPLICATION

(11) **EP 0 884 896 A1**
(43) Date of publication of application: **16.12.1998**
(21) Application number: 98201754.3
(22) Date of filing: 26.05.1998
(51) Int. Cl.: H04N 5/225

(54) **A low power display for a digital image capture device.**

(30) Priority: 09.06.1997 US 871745
(71) Applicant: Bayer Corporation, Pittsburgh, PA 15219-2502 (US)
(72) Inventor: Pandelaers, Patrick, Andover, MA (US)
(74) Representative: Van Ostaeyen, Marc Albert Jozef

(57) **Abstract**

A low power electronic display (32) for a digital image capture device such as a digital camera, wherein the display uses external light energy produced by an external source of illumination (42) for its radiation. The low power electronic display can be implemented using a nonbacklit transmissive LCD display, a reflective LCD display, or other type of display which can use external light energy produced by an external source of illumination for its radiation.

## Description

### BACKGROUND OF THE INVENTION

Several currently available digital cameras include a built-in, electronically backlit, liquid crystal (LCD) color display which operates as a viewfinder and/or image viewer, allowing an operator to view an scene to be photographed, and review previously captured digital images. Unfortunately, such backlit LCD displays consume a great deal of power, requiring the camera batteries to be recharged or replaced quite often.

### SUMMARY OF THE INVENTION

The present invention solves this problem by providing a low power electronic display (e.g., a nonbacklit LCD display) for a digital image capture device such as a digital camera or a digital camcorder, wherein the low power electronic display uses external light energy produced by an external illumination source for its radiation.

A first embodiment of the present invention incorporates a retractable low power display which selectively extends from the housing of a digital camera. When not required, the display can be retracted into the housing of the digital camera. When a user requires the display for use as a viewfinder or for the review of previously captured digital images, the display extends or "pops out" of the digital camera housing. The display is designed to use external light energy for its radiation, produced by an external illumination source such as the sun, a fluorescent or incandescent lamp, or other suitable illumination means, allowing the user to easily view an image presented on the display without the deleterious battery drain suffered by prior art digital cameras having, for example, backlit LCD displays.

The low power display of the present invention can be implemented using a wide variety of technologies. For example, a nonbacklit transmissive LCD display can be used. A diffuser can be employed in conjunction with the transmissive LCD display to provide a more uniform distribution of light energy across the display. An antireflective coating can be applied to reduce or eliminate any glare from the viewing surface of the transmissive LCD display.

Other types of low power displays, such as a reflective-type LCD display, can also be used in the present invention. Regardless of the type of display used, it is important to note that the display uses external light energy produced by an external illumination source for its radiation, thereby greatly extending the life of the batteries used by the digital camera.

In another embodiment of the present invention, the low power display is pivotally attached to the housing of the digital camera. When not required, the display can be pivoted to an unobtrusive position on the digital camera. When needed for visual feedback or image review, the display can be pivoted to a position where it can receive external light energy from an external illumination source.

In yet another embodiment of the present invention, the low power display is fixedly attached to the housing of the digital camera, much like a conventional viewfinder, such that a user can look through the digital camera via the display. The display receives external light energy from an external source of illumination through the front of the digital camera. Digital image data on the display is presented to a user at the back of the digital camera.

### BRIEF DESCRIPTION OF THE DRAWINGS

The features of the present invention will best be understood from a detailed description of the invention and preferred embodiments thereof selected for the purposes of illustration and shown in the accompanying drawings in which:
FIG. 1 is a front perspective view of a prior art digital camera;
FIG. 2 is a rear perspective view of the prior art digital camera illustrated in FIG. 1, wherein the digital camera is tethered to a computer workstation;
FIG. 3 is a rear perspective view of a digital camera incorporating a low power display in accordance with a first embodiment of the present invention;
FIG. 4 is a cross-sectional view of the low power LCD display taken along line 4--4 of FIG. 3;
FIG. 5 is a cross-sectional view of an alternate embodiment of the low power LCD display of FIG. 3;
FIG. 6 illustrates another embodiment of the present invention having a pivotable low power display;
FIG. 7 illustrates yet another embodiment of the present invention;
FIG. 8 is a cross-sectional view taken along line 8--8 of FIG. 7;
FIG. 9 illustrates a detachable low power display; and
FIG. 10 illustrates an auxiliary illumination source for use with the low power display of the present invention.

### DETAILED DESCRIPTION OF THE INVENTION

The objects, features, and advantages of the present invention are illustrated in detail in the accompanying drawings, wherein like reference numerals refer to like elements throughout the drawings.

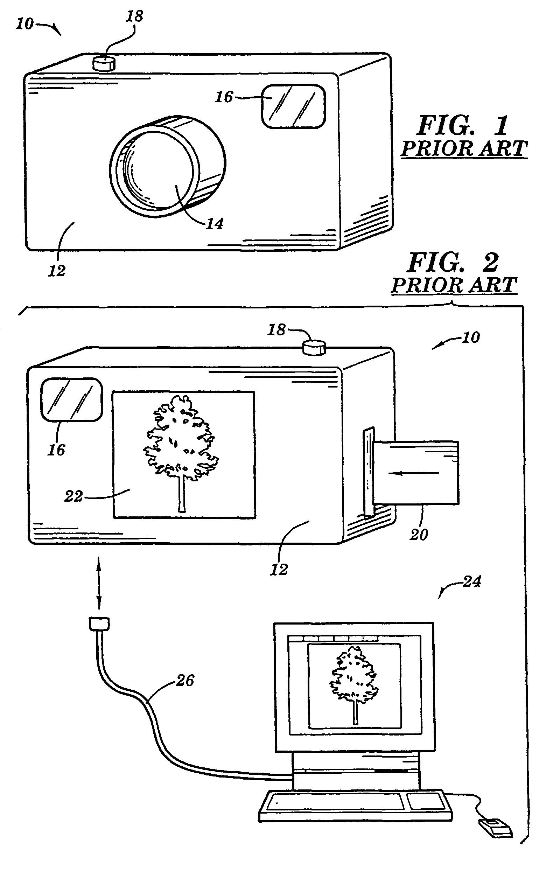

A conventional digital camera, generally designated as 10, is illustrated in FIGS. 1 and 2. As known in the art, the digital camera 10 generally includes a housing 12 enclosing the electronic, sensor, and computer components necessary for the acquisition, storage and display of a plurality of digital images. The digital camera 10 further includes a focusing lens arrangement 14, a conventional viewfinder 16, and a "shutter" button 18 for initiating the capture of a scene to be photographed. A nonvolatile storage device 20, such as a PCMCIA removable storage card, is provided for the storage of a plurality of digital images captured by the digital camera 10. The camera 10 may additionally include a supply of random access memory (RAM) for the temporary storage of captured digital images.

A rear perspective view of the digital camera 10 is illustrated in FIG. 2. As shown, a liquid crystal (LCD) display 22 (color or monochrome) is incorporated into the back of the housing 12. The LCD display 22 allows an operator to view a low resolution representation of a captured digital image. This image may be the most recently captured digital image, or a previously captured digital image stored in the RAM or the storage device 20. Also, the LCD display 22 can be used as a viewfinder to frame an image in lieu of, or in conjunction with, viewfinder 16.

Each captured digital image is stored in high resolution in the RAM and/or on the storage device 20. The high resolution digital images are immediately available for viewing, editing and/or processing if, at the time of image capture, the digital camera 10 is tethered to a computer workstation 24 by an appropriate cabling arrangement 26. In this case, the operator of the digital camera 10 can immediately examine the detail of a captured digital image and, if necessary, reshoot the scene. When away from the computer workstation, however, the operator must rely on the low resolution image presented on the LCD display 22 to judge the quality of a captured digital image.

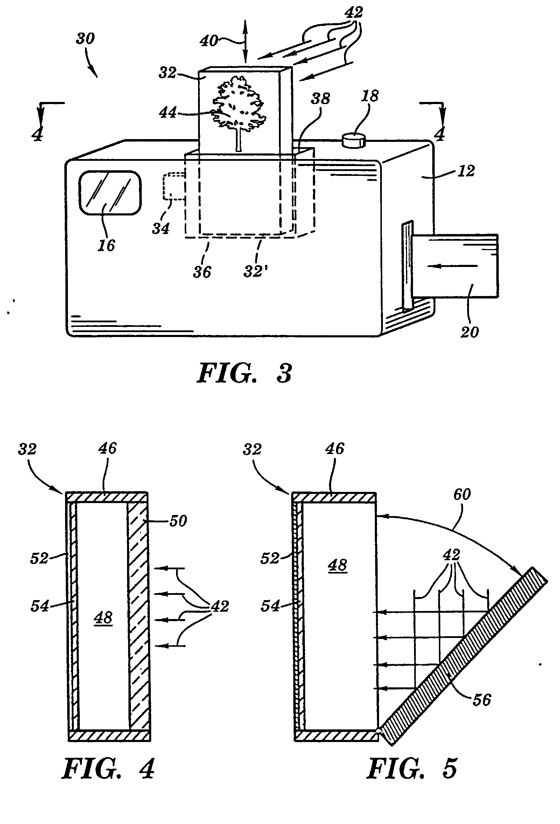

Referring now specifically to FIG. 3, there is illustrated a rear perspective view of a digital camera 30 incorporating a low power display in accordance with a first preferred embodiment of the present invention. As in FIG. 1, the digital camera 30 includes a housing 12 enclosing the electronic, sensor, and computer components necessary for the acquisition, storage and display of a plurality of digital images, a focusing lens arrangement (not shown), a viewfinder 16, a button 18 for initiating image capture, and a removable storage device 20. The digital camera 30 further includes a retractable, low power LCD display 32 for displaying the images captured by, or stored in, the digital camera 30. Unlike the backlit LCD display 22 used by the digital camera 10 shown in FIG. 1, the digital camera 30 does not use backlighting when displaying a captured digital image on the low power LCD display 32. Instead, the low power display 32 is irradiated by external light energy produced by an external illumination source independently of the source (e.g., batteries) powering the digital camera 30.

In this embodiment, the low power display 32 is retractable. This is accomplished using a spring-loaded retraction system 34 or equivalent arrangement a manner known in the art. In the retracted position, as indicated in phantom as 32' in FIG. 3, the low power display is located within an enclosure 36 formed in the housing 12 of the digital camera 30. The enclosure 36 includes an aperture 38 formed in the top of the housing 12 through which the low power display 32 is retracted or extended.

The low power display 32 is designed to be displaced between extended and retracted positions as indicated by directional arrow 40 in FIG. 3. In the extended position, the low power display 32 uses external light energy produced by an external source of illumination 42 for its radiation. The external light energy passes through the display from front to back, allowing a user to view a captured digital image 44 on the display. It should be noted that the digital image 44 is displayed in a conventional manner on the low power display 32, but without backlighting.

A cross-sectional view of the low power LCD display 32 taken along line 4--4 of FIG. 3 is provided in FIG. 4. The low power display 32 includes a housing 46 containing a transmissive LCD imaging unit 48 on which a captured digital image is displayed in a conventional manner. A transmissive diffuser 50 is positioned on the front side of the imaging unit 48 to uniformly distribute the light energy received from the external source of illumination 42 across the imaging unit 48. An antireflective coating 52 is applied to the glass faceplate 54 on the opposing side of the imaging unit 48 to reduce glare when viewed by a user.

As illustrated in FIG. 5, a diffuser 56 used in a reflective mode can also be used to uniformly distribute the light energy from an external source of illumination 42 across the imaging unit 48. In this case, the diffuser 56 is pivotally attached to the housing 46 of the display 32 at pivot point 58. When in the position shown in FIG. 5, the diffuser 56 uniformly redirects light energy from an overhead illumination source across the imaging unit 48 of the display 32. The diffuser 56 can be repositioned as necessary as depicted by directional arrow 60, depending on the location of the illumination source, to adjust the level of light energy directed toward the display 32. Alternately, the diffuser 56 can be pivotally attached to the housing 12 of the digital camera 30.

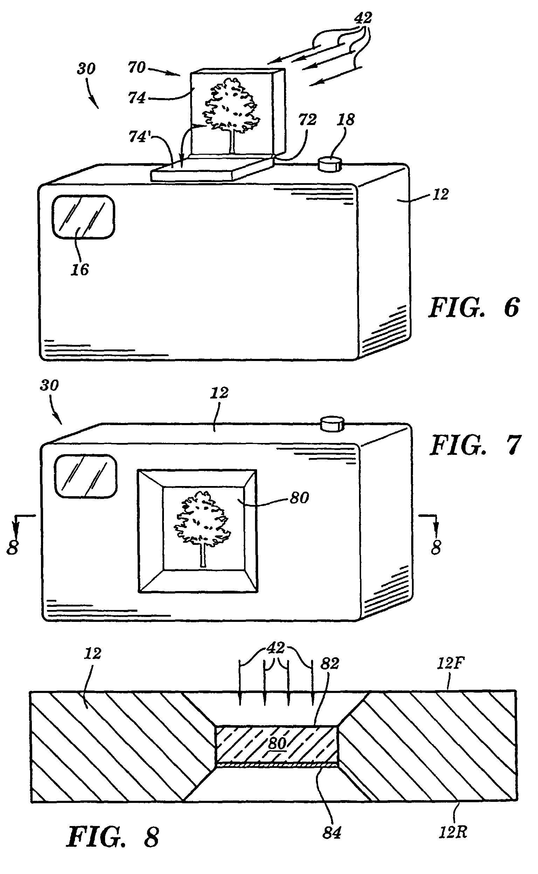

A digital camera 30 incorporating a low power display 70 in accordance with a second embodiment of the present invention is illustrated in FIG. 6. The display 70 is pivotally secured to the top of the housing 12 of the digital camera 30 at pivot point 72. The display 70 can be pivoted between a first upright position 74 for the display of digital image data captured by the digital camera 30, and a second position 74'. In the first position 74, the display uses external light energy produced by an external illumination source 42 for its radiation. In the second position 74', the display 70 is positioned flat against the top of the housing 12.

A further embodiment according to the present invention is shown in FIG. 7. In this embodiment, the digital camera 30 includes a low power display 80 which is fixed within the housing 12 of the camera.

As is shown more clearly in the cross-sectional view provided in FIG. 8, the display 80 has a first side 82 positioned on a front side 12F of the housing 12, and a second side 84 positioned on a rear side 12R of the housing. In operation, the display 80 uses external light energy provided by an external source of illumination 42 for its radiation. The light energy enters the front side 82 of the display, thereby allowing a user to view digital image data on the second side 84 of the display.

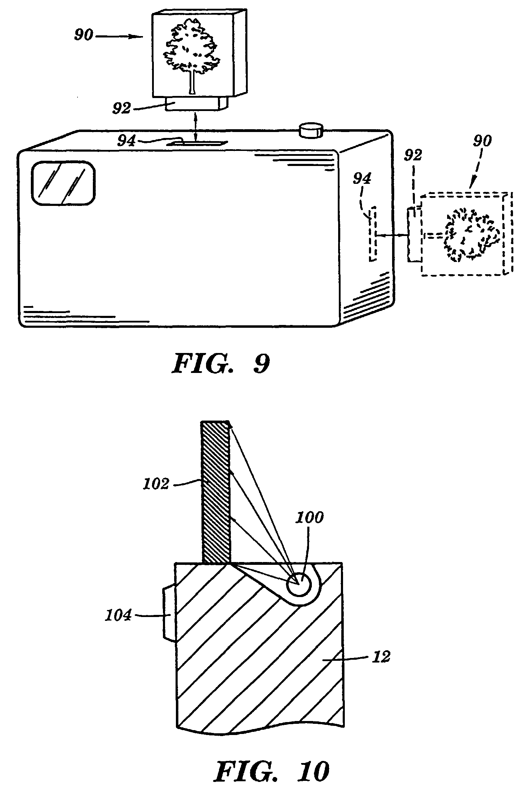

A detachable low power display 90 in accordance with the present invention is illustrated in FIG. 9. The low power display 90 includes a connector 92 which is removably insertable into a corresponding port 94 formed in housing 12 of the digital camera 30.

In some cases, an adequate source of external illumination is not available to a user of the digital camera 30. This may occur, for example, when taking a digital photograph of a scene in a darkened room. However, by selectively using an auxiliary illumination source, the digital camera 30 can be used in any lighting condition. Such an auxiliary illumination source 100 is illustrated in FIG. 10. In this example, the auxiliary illumination source 100 is recessed in the top of the housing 12 in front of the low power display 102. The illumination source 100 may be selectively actuated by a user via button 104. Alternately, the illumination source 100 may be automatically activated using a photodetector or the like.

The foregoing description of the present invention has been presented for purposes of illustration and description. It is not intended to be exhaustive or to limit the invention to the precise form disclosed, and many modifications and variations are possible in light of the above teaching. Such modifications and variations that may be apparent to a person skilled in the art are intended to be included within the scope of this invention as defined by the accompanying claims.

## Claims

1. A digital image capture system comprising:
a digital image capture device (30) for converting a scene into digital image data;
a housing (12) for said digital image capture device; and
a display (32), coupled to said housing and exclusively using external light energy produced by an external source of illumination (42) for its radiation, for displaying said digital image data.

2. The digital image capture system according to claim 1,
wherein said display is a nonbacklit, transmissive, liquid crystal (LCD) display.

3. The digital image capture system according to claim 1 or 2, further including;
a diffuser (56) for uniformly distributing light energy from said external source of illumination across said display.

4. The digital image capture system according to claim 3, further including:
an assembly (58) for adjusting a position of said diffuser relative to said display.

5. The digital image capture system according to any of claims 1 to 4, further including:
antireflective means (52) for reducing reflection from a viewing side of said display.

6. The digital image capture system according to any of claims 1 to 5, further including:
an assembly (34) for retractably coupling said display to said housing, wherein said display can be selectively displaced between a retracted position (32') at least partially within the housing of said camera, and an extended position for the display of said digital image data, and wherein said display uses external light energy produced by said external source of illumination for its radiation when in said extended position.

7. The digital image capture system according to any of claims 1 to 5, further including:
an assembly (72) for pivotally coupling said display to said housing, wherein said display can be selectively pivoted between a plurality of positions, including a position (74) for the display of said digital image data, and wherein said display uses external light energy produced by said external source of illumination for its radiation when positioned in said display position.

8. The digital image capture system according to claim 1,
wherein said display is a reflective liquid crystal (LCD) display.

9. The digital image capture system according to claim 1,
wherein a periphery of said display is enclosed within said housing,
said display having a first side (12F) on a front of said housing for receiving light energy from said external source of illumination,
and a second side (12R) on a rear of said housing for displaying said digital image data.

10. The digital image capture system according to any of claims 1 to 9, wherein said display is detachably mounted (90) to said housing.

11. The digital image capture system according to any of claims 1 to 10, further including:
an auxiliary illumination source (100) providing light energy to said display; and
a switch (104) for selectively actuating said auxiliary illumination source.

12. The digital image capture system according to claim 1, wherein said digital image capture device is a digital camera.
